# EUROPEAN PATENT SPECIFICATION

(11) **EP 2 086 199 B1**
(45) Date of publication and mention of the grant of the patent: **20.01.2010**
(21) Application number: 08163755.5
(22) Date of filing: 05.09.2008
(51) Int. Cl.: H04L 29/06

(54) **Method and apparatus for setting up an audio conference connection**
Verfahren und Vorrichtung zur Einrichtung einer Audiokonferenzverbindung
Procédé et appareil pour configurer une connexion de conférence audio

(30) Priority: 31.01.2008 CN 200810006800
(43) Date of publication of application: 05.08.2009
(73) Proprietor: Huawei Technologies Co., Ltd., Longgang District, Shenzhen Guangdong 518129 (CN)
(72) Inventor: Cha, Feng Huawei Administration Building,, Shenzhen 518129 Guangdong (CN)
(74) Representative: Hengelhaupt, Jürgen

(56) References cited:
- US-A1- 2003 026 214
- CHO Y H ET AL.: "Policy-Based Distributed Management Architecture for Large-Scale Enterprise Conferencing Service Using SIP" IEEE JOURNAL ON SELECTED AREAS IN COMMUNICATIONS, IEEE SERVICE CENTER, PISCATAWAY, US, vol. 23, no. 10, 1 October 2005 (2005-10-01), pages 1934-1949, XP011140061 ISSN: 0733-8716
- CHANG J-C ET AL: "Application-Layer Conference Trees for Multimedia Multipoint Conferences Using Megaco/H.248" IEEE TRANSACTIONS ON MULTIMEDIA, IEEE SERVICE CENTER, PISCATAWAY, NJ, US, vol. 7, no. 5, 1 October 2005 (2005-10-01), pages 951-959, XP011139274 ISSN: 1520-9210
- ROSENBERG J. CISCO SYSTEMS: "A Framework for Conferencing with the Session Initiation Protocol (SIP); rfc4353.txt" IETF STANDARD, INTERNET ENGINEERING TASK FORCE, IETF, CH, 1 February 2006 (2006-02-01), pages 1-29, XP015044786 ISSN: 0000-0003

## Description

### FIELD OF THE INVENTION

The present invention relates to the field of communication technologies, and in particular, to a method and an apparatus for setting up an audio conference connection.

### BACKGROUND

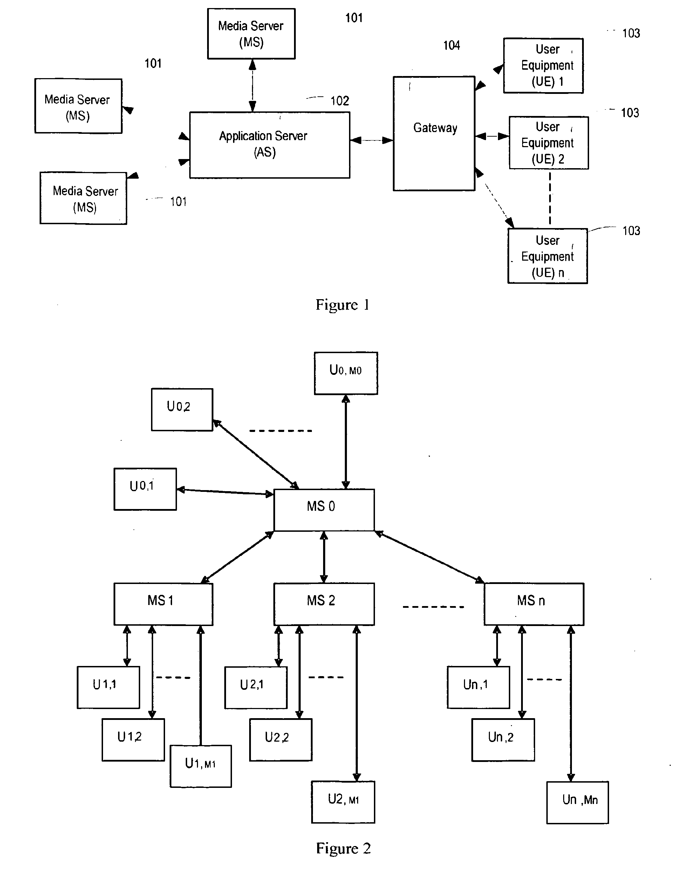

Audio conference is also known as teleconference. It is an important prevalent service in the Next Generation Network (NGN) and the IP Multimedia Subsystem (IMS). Currently, in the telecom field, the audio conference system is primarily constructed on an IP MS. For example, as shown in Figure 1, an audio conference system under the Session Initiation Protocol (SIP) includes a Media Server (MS) 101 and a SIP Application Server (AS) 102. The SIP AS102 is adapted to control the User Equipment (UE) 103 and the MS101, execute the conference logics and construct the conference signaling, maintain the resources on the MS101, and allocate resources for the calls. In the process of creating an audio conference, the UE involved in the conference originates a call to the SIP AS102 through the gateway 104, and the SIP AS102 originates a call to the MS101 to create an audio conference. Alternatively, the SIP AS102 can originate a conference actively. A common method of setting up an audio conference connection in the system shown in Figure 1 is described below, supposing that the SIP AS originates the conference.

The SIP AS102 sends an INVITE (SIP call origination) message to the UE103. After going off-hook or picking up the phone, the UE 103 returns a 200 OK (acknowledgement) message to the SIP AS102, with the Session Description Protocol (SDP) information of the UE103 carried in the message. The SDP information includes the IP address for receiving the audio packet, the port ID and the type of the processing media.

The SIP AS102 sends an INVITE message to the MS101, with the SDP information of the UE103 carried in the message. In this way, the MS101 can create a conference terminal for receiving and transmitting data according to the SDP information of the UE103, and allocate an IP port for receiving and another IP port for transmitting data, to the conference terminal. The conference terminal can be regarded as an entity for transmitting data between the audio processors located on the UE103 and the MS101.

After creating the conference terminal of the UE103, the MS101 sends a 200 OK message to the UE103 through SIP AS102, with the SDP information of the conference terminal carried in the message. After the UE103 and the corresponding conference terminal on the MS101 know the relevant information about the peer such as IP address and port ID of the peer, the UE103 and the MS101 can transmit data in between according to the peer SDP information.

In the process of creating the present invention, the weaknesses of the prior art is described hereinafter.

In the prior art, audio conference can be implemented on only one MS. Namely, no matter how many UEs are involved in the audio conference, all UEs of the conference are connected to only one MS, which requires the MS to have enough resources for supporting the whole conference. However, a general commercial MS has limited quantity of audio conference ports. When the operation is busy, one MS tends to operate multiple conferences, which occupy plenty of resources. Therefore, if the quantity of attendees of a conference goes far beyond the capacity of a single MS, it is impossible to create a conference with enough resources on the MS, and the conference has to be cancelled or the number of attendees has to be reduced. Consequently, the conference service is affected. In the prior art, the capacity of resources on a single MS tends to limit the size of an audio conference and affect smooth progress of the audio conference.
"Policy-based Distributed Management Architecture For Large-scale Enterprise Conferencing Service Using SIP", IEEE Journal, 2005-10-01, discloses that mixers communicate with at least one second mixer according to the quantity of terminals involved in a conference.
US 020030026214 A1 discloses that a central MRF involves other MRFs when needed based on certain parameters, e.g. load and participant location.
"Application-Layer Conference for Multimedia Multipoint Conferences Using Megaco/H.248", IEEE Transactions On Multimedia, 2005-10-01, discloses a tree-based solution for multipoint conferences over the Internet.

### SUMMARY

The embodiments of the present invention provide a method and an apparatus for setting up audio conference connections, so as to create a large audio conference through multiple concatenated MSs.

A method for setting up audio conference connections provided in an embodiment of the present invention according to claim 1 includes:
allocating at least two Media Servers, MSs, according to the quantity of terminals involved in an audio conference;
selecting one MS from the at least two MSs as a root node MS, and the remaining MS(s) as leaf node MS;
establishing communication between the root node MS and the leaf node MS(s); and
establishing communication between a terminal and the MS served for the terminal; wherein the process of establishing communication between a terminal and the MS served for the terminal comprises: establishing communication between the terminal that needs to speak and the root node MS; and establishing communication between the terminal that needs not to speak and the leaf node MS.

Based on the previous technical solution, the present invention also discloses an apparatus for setting up an audio conference connection, including:
an allocating unit, adapted to allocate at least two Media Servers, MSs, according to the quantity of terminals involved in an audio conference, and select one MS from the at least two MSs as a root node MS, and the remaining MS(s) as leaf node MS;
a terminal communication unit, adapted to establish communication between a terminal and an MS served for the terminal; and
an MS communication unit, adapted to establish communication between the root node MS and the leaf node MS(s); wherein the terminal communication unit further allocates terminals ready to speak onto the root node MS and allocates other terminals not ready to speak onto the leaf node MS.

Compared with the prior art, the embodiments of the invention provide the benefits described hereinafter.

The embodiments of the present invention can concatenate multiple MSs to implement functions of a large conference without limiting the UE quantity in the case that a single MS is not enough, thus solving the inability of convening large conferences reliably in the prior art for deficiency of MSs in the operation environment. The user can operate the conference on a large integrated virtual MS regardless of the conference size and the quantity of MSs on which the conference is distributed. The operators can deploy the MSs of a proper quantity according to the scale of the concurrent users. The existing MSs can be integrated into the technical solution under the present invention regardless of the manufacturer, only if they provide standard interfaces and capacity parameters.

### BRIEF DESCRIPTION OF THE DRAWINGS

Figure 1 shows an exemplary architecture of an audio conference system in the prior art.

Figure 2 shows an exemplary architecture of a concatenated audio conference system according to an embodiment of the present invention.

Figure 3 is an exemplary flowchart of a method for setting up a concatenated audio conference between MSs according to an embodiment of the present invention.

Figure 4 is an exemplary flowchart of a method for setting up an audio conference connection between a UE with an MS according to an embodiment of the present invention.

Figure 5 shows an exemplary flowchart of a dynamic concatenation method according to an embodiment of the present invention.

Figure 6 is an exemplary flowchart of a method for switching the UE from the mute state to the speaking state according to an embodiment of the present invention.

Figure 7 shows an exemplary architecture of an apparatus for setting up an audio conference connection according to an embodiment of the present invention.

Figure 8 shows an exemplary architecture of an MS unit in the apparatus shown in Figure 7 according to an embodiment of the present invention.

Figure 9 shows an exemplary architecture of another MS unit in the apparatus shown in Figure 7 according to an embodiment of the present invention.

Figure 10 shows an exemplary architecture of another apparatus for setting up an audio conference connection according to an embodiment of the present invention.

### DETAILED DESCRIPTION

The present invention is hereinafter described in detail with reference to embodiments and accompanying drawings.

In a method for setting up audio conference connections according to an embodiment of the present invention, a SIP AS performs uniform management on all MSs in the system, and is responsible for allocating resources to such MSs. The MSs may involve different manufacturers. When the resources of a single MS are not enough for supporting the whole audio conference, the SIP AS can make two or more MSs into a tree topology. One of the MSs serves as a root node MS, and the remaining MSs serve as leaf node MSs in the conference of a tree structure. Afterward, the SIP AS allocates the UEs onto leaf node MSs or the root node MS, sets up a connection between every UE with the MS that serves that the UE and sets up a connection between every leaf node MS and the root node MS, thus accomplishing connections between all UEs. To put it simply, the audio conference connected through a tree structure may be called a "concatenated audio conference" hereinafter.

Figure 2 shows an exemplary architecture of a concatenated audio conference system according to an embodiment of the present invention. When the size of the audio conference is large and a single MS has deficient resources for the audio conference, the SIP AS102 will allocate multiple MSs to the audio conference, for example, MS0 to MSn in Figure 1, according to the size of the audio conference and the resource capacity on each MS. In the architecture, the MS0 is a root node, and a total of M0 UEs are allocated to the MS0. Therefore, M0 conference terminals are allocated on MS0. Meanwhile, n conference terminals are allocated on the MS0, corresponding to the leaf nodes MS1 to MSn. In this way, the MS0 occupies at least "M0 + n" conference terminals. Besides, for the leaf node MS1 shown in Figure 2, the SIP AS allocates M1 conference terminals corresponding to the UEs, and allocates one conference terminal for accessing the root node MS0. Other leaf nodes are similar. In this example, M0 and n are respectively natural number

A method for setting up audio conference connections is illustrated below with reference to the system architecture shown in Figure 2. In this method, each leaf node MS in the conference needs to be connected with the root node MS0, and the UE allocated onto each MS needs to be connected with the MS that serves the UE.

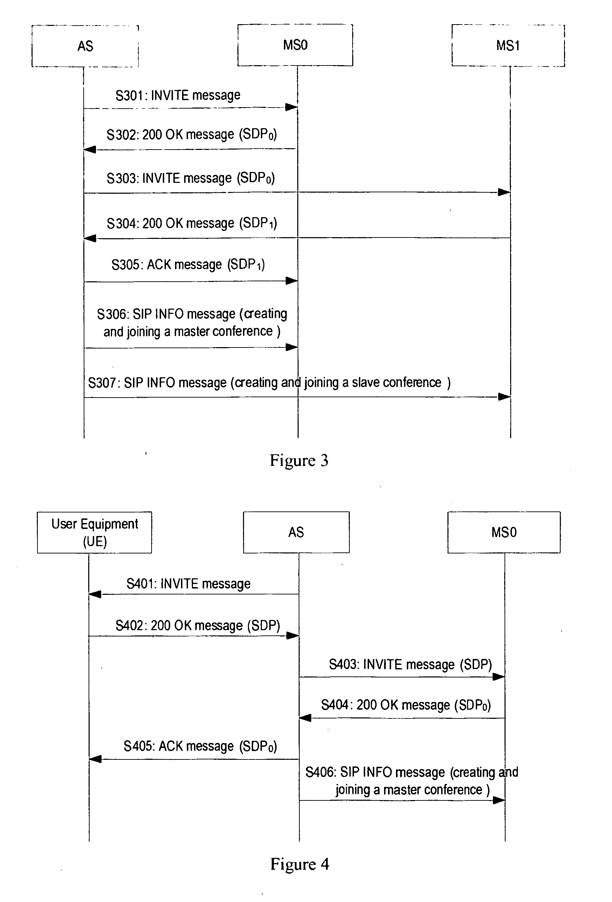

Figure 3 is the flowchart of a method for setting up a concatenated audio conference between a root node and leaf nodes according to an embodiment of the present invention. The method for setting up a concatenated audio conference between a leaf node MS1 and a root node MS0 showed in the system shown in Figure 2 includes the steps hereinafter.

S301: The SIP AS in the system sends an INVITE message to the root node MS0.

S302: After receiving the INVITE message, the MS0 creates a conference terminal T0, and allocates an IP port for receiving and another IP port for sending audio packets, to the conference terminal T0. Then the MS0 returns a 200 OK message to the SIP AS. The 200 OK message carries the SDP₀ information of the conference terminal T0. The SDP₀ information includes: IP address and port ID of the conference terminal T0 for receiving the audio packets, and type of media for processing.

S303: The SIP AS sends an INVITE message to the leaf node MS1. The INVITE message carries the SDP₀ information of the conference terminal T0.

S304: After receiving the INVITE message in the S303, the MS1 creates a conference terminal T I, and allocates an IP port for of receiving and another IP port for sending audio packets, to the conference terminal T1. Then the MS1 returns a 200 OK message to the SIP AS. The 200 OK message carries the SDP₁ information of the conference terminal T1. The SDP₁ information includes: IP address and port ID of the conference terminal T1 for receiving the audio packets, and type of media for processing.

S305: The SIP AS sends the SDP₁ information to the MS0 through an ACK (acknowledgement) message, notifying the MS0 of the information about the conference terminal allocated to the MS1. In this way, the two conference terminals T0 and T1 know the SDP information of each other, and can transmit data according to the SDP information of each other in the subsequent communication. By now, the connection for the audio conference has been set up.

S306: The SIP AS sends a SIP INFO (SIP media processing control language) message to the MS0, instructing the MS0 to create a master conference and add the conference terminal T0 into the created master conference.

S307: The SIP AS sends a SIP INFO message to the MS1, instructing the MS1 to create a slave conference and add the conference terminal T1 into the created slave conference. The method for creating a concatenated conference between other leaf nodes and the root node MS0 is similar and not repeated here any further.

The method described above is about setup of a concatenated audio conference between MSs. After required leaf node MSs are connected with the root node MS0, if the UEs on each MS are added into the conference, the whole audio conference is set up. The method for adding a UE into an MS is described below. Figure 4 is an example flowchart of a method for setting up an audio conference connection between a UE with an MS according to an embodiment of the present invention. The method includes the steps hereinafter.

S401: The SIP AS sends an INVITE message to the UE.

S402: After going off-hook, the UE returns a 200 OK message that carries the SDP information of the UE to the SIP AS. The SDP information includes: IP address and port ID of the UE for receiving audio packets, and type of media for processing.

S403: The SIP AS sends an INVITE message to the MS. The INVITE message carries the SDP information of the UE.

S404: After receiving the INVITE message, the MS creates a conference terminal T0, and allocates an IP port for receiving and another IP port for sending audio packets, to the conference terminal T0. Then the MS returns a 200 OK message to the SIP AS. The 200 OK message carries the SDP₀ information of the conference terminal T0. The SDP₀ information includes: IP address and port ID of the conference terminal T0 for receiving the audio packets, and type of media for processing.

S405: The SIP AS sends an ACK message that carries the SDP₀ information of T0 to the UE, notifying the UE of the information about the conference terminal T0 on the MS. In this way, the UE and the conference terminal know the SDP information of each other, and hence can communicate with each other according to the SDP information.

S406: The SIP AS sends a SIP INFO message to the MS, instructing the MS to add the conference terminal T0 into the corresponding master conference and slave conference. In this way, the UE connected with the conference terminal T0 is connected into the conference.

Besides, in step 406, if no master or slave conference is created on the MS, the SIP AS sends a SIP INFO message to the MS, instructing the MS to create a master or slave conference and add the conference terminal T0 into the created conference. Alternatively, SIP AS sends a first SIP INFO message for creating a master or slave conference first, instructing the MS to create a master or slave conference; and then sends a second SIP INFO message for joining the master or slave conference, instructing the MS to add the conference terminal T0 into the created conference. Commonly, the master conference is the conference which is initiated on a main media server at very first; the slave conference is established on a new media server when resources of the main media server turn short. An application server can control the slave conferences to add them into the master conference, which makes a large-scale conference.

In the previous embodiments, when the size of an audio conference is very large and a single MS has deficient resources for creating the conference, the SIP AS can distribute the UEs involved in the audio conference onto different MSs, connect the UEs on each MS with the MS in the way shown in Figure 4, and concatenate the all leaf node MSs with the root node MS in the way shown in Figure 3, thus adding all members into the audio conference.

The quantity of MSs allocated depends on the quantity of UEs involved in the conference and the quantity of ports available from each MS. A master conference is created on the root node MS, and a slave conference is created on each leaf node MS. On each leaf node MS, the SIP AS needs to not only allocate a conference terminal to the UE, but also allocate a conference terminal to the upper-level root node MS for joining the master conference of the root node MS. Likewise, on the root node MS, the SIP AS needs to not only allocate a conference terminal to the UE involved in the master conference, but also allocate a conference terminal to each leaf node involved in the master conference to ensure communication with each leaf node.

Note that in the embodiment shown in Figure 3, the root node MS is instructed to create a conference terminal through S301, and then in S303, the leaf node MS is instructed to create a conference terminal associated with the conference terminal of the root node MS, thus setting up a connection between the root node MS and the leaf node MS. Alternatively, the method for setting up a connection between the root node MS and the leaf node MS may be: in S301', instructing the leaf node MS to create a conference terminal, and then in S302', sending the SDP information about the conference terminal created by the leaf node MS to the SIP AS through a 200 OK message; finally in S303', instructing the root node MS to create a conference terminal associated with the conference terminal on the leaf node MS.

The previous embodiment is briefly known as static concatenation creation mode; namely, the UEs involved in the conference are constant. Therefore, an audio conference of the corresponding size can be created according to the quantity of UEs involved in the conference. Nevertheless, in the actual conference process, it is a dynamic mode alternatively. That is, if a new member wants to join the conference, the SIP AS will calculate out whether the MS involved in the conference has additional resources for creating a conference terminal. If additional resources are available, the SIP AS will allocate a conference terminal to the new UE on the MS with resources in the way shown in Figure 4, and then add the conference terminal into the conference on the MS.

If there are more than one new UE that needs to join the conference but the resources in the MS are not enough for such UEs, the SIP AS will allocate a leaf node MS to the conference, and connect the new UEs with the newly allocated leaf node MS; and connect the newly allocated leaf node MS with the root node MS. The method for connecting the UE with the newly allocated leaf node MS is similar to the embodiment shown in Figure 4, and the method for connecting the newly allocated leaf node MS with the root node MS is similar to the embodiment shown in Figure 3.

Furthermore, if the SIP AS calculates and determines that the conference in the root node MS has no resource for adding the newly allocated leaf node MS, the SIP AS will divert a UE in the root node MS from the master conference to the slave conference before connecting the newly allocated leaf node MS to the root node. In this way, a conference terminal associated with the UE is spared for concatenation with the new MS. Afterward, the SIP AS connects the new MS with the root node MS of the conference to add the new UE. To put it simply, the method for adding new UEs into an existing concatenated audio conference is called "dynamic concatenation", and the conference connected in this method is called a "dynamic concatenation conference".

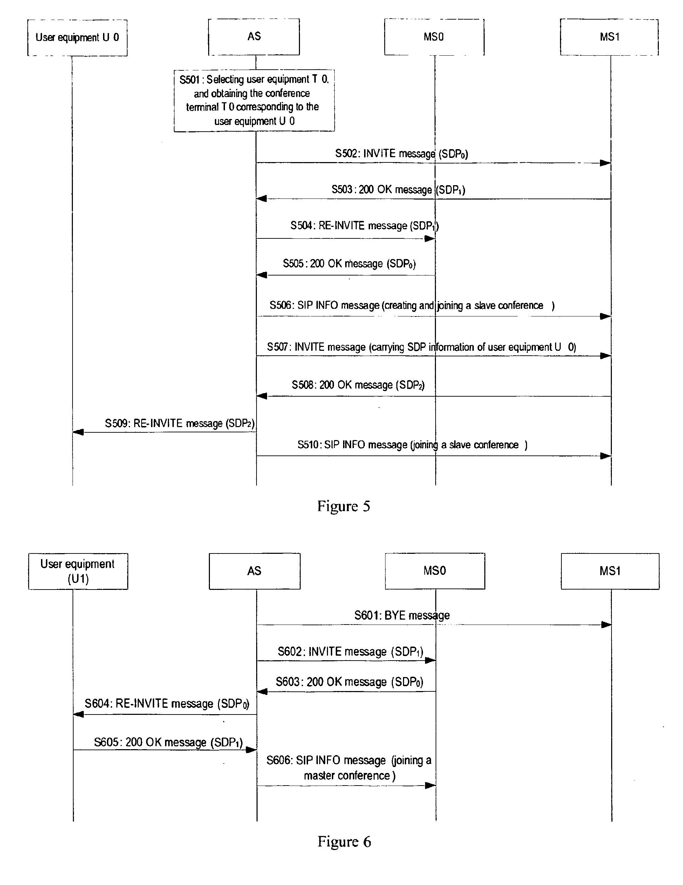

Figure 5 shows an example flowchart of a dynamic concatenation method according to an embodiment of the present invention. If the conference in the MS has deficient resources for adding the new user equipment U1, and the embodiment includes the steps hereinafter.

S501: The SIP AS selects a user equipment U0 on the root node MS0, and obtains a conference terminal T0 corresponding to the user equipment U0 according to the corresponding relationship between the UE maintained by the SIP AS and the conference terminal on the MS0. The SIP AS can choose the UE in the mute state as the U0 preferably. Here, the "mute" means that it is forbidden to be heard from.

S502: The SIP AS allocates a new leaf node MS1 to the conference, and sends the SDP₀ information of the conference terminal T0 on the MS0 to the MS1 through an INVITE message.

S503: After receiving the INVITE message, the MS1 creates a conference terminal T1, and allocates an IP port for the purposes of receiving and another IP port for sending audio packets, to the conference terminal T1. Then the MS I returns a 200 OK message to the SIP AS. The 200 OK message carries the SDP₁ information of the conference terminal T1. The SDP₁ information includes: IP address and port ID of the conference terminal T1 for receiving the audio packets, and type of media for processing.

S504: The SIP AS sends a RE-INVITE message to the MS0, with the SDP₀ information of the conference terminal T1 carried in the message.

S505: The MS₀ returns a 200 OK message to the SIP AS after receiving the RE-INVITE message. The 200 OK message carries the SDP₀ information of the conference terminal T0.

S506: The SIP AS sends a SIP INFO message to the MS, instructing the MS1 to create a slave conference and add the conference terminal T1 into the created slave conference.

S507: The SIP AS sends an INVITE message to the MS1, with the SDP information of the user equipment U0 carried in the message.

S508: After receiving the INVITE message in the S507, the MS1 creates a conference terminal T2, and sends the SDP₂ information of the conference terminal T2 to the SIP AS through a 200 OK message.

S509: After receiving the 200 OK message, the SIP AS sends a RE-INVITE message to the U0, with the SDP₂ information of the conference terminal T2 carried in the message.

S510: The SIP AS sends a SIP INFO message to the MS, instructing the MS1 to add the conference terminal T2 into the created slave conference.

Furthermore, in S502, before sending the INVITE message to the MS1, the SIP AS may send a BYE (terminate call) message to the MS0, instructing the MS0 to release the conference terminal T0. In this case, in S504, the SIP AS may send an INVITE message to the MS0 instead of the RE-INVITE message in S504, instructing the MS0 to create another conference terminal; and in S505, the 200 OK message returned to the SIP AS carries the SDP information of the newly created conference terminal. The INVITE message in S504 carries the SDP₁ information of the T1 allocated by the MS1.

In the previous embodiment, when a new member wants to join a conference but the MS of the conference has deficient resources, the SIP AS can switch the UE in the root node MS to the leaf node in order to release a certain amount of resources for connecting the new leaf node MS, and then add the new member UE into the conference through a new leaf node MS. In the previous embodiment, the conference size is expanded by adding new leaf node MSs. The embodiments of the present invention are easily operable, highly adaptable, and satisfy the conferences of various sizes to a great extent.

Furthermore, in the embodiment shown in Figure 5, if the user equipment U0 in the root node MS0 is in the mute state, then in S506, the SIP AS may not only send a SIP INFO message to the MS1 for creating and joining a slave conference, but also send a SIP INFO message to the MS0 for canceling the mute state of the user equipment U0.

In some other embodiments of the present invention, the UE on the leaf node MS may be mute, and the speaking UE may be distributed on the root node MS, so as to avoid echo of the conference. Therefore, if a UE on the leaf node needs to speak, the UE must exit the slave conference on the leaf node MS and join the master conference on the root node MS. Figure 6 is an example flowchart of a method for switching the UE from the mute state to the speaking state according to an embodiment of the present invention. In this embodiment, when the user equipment U1 on the leaf node MS1 is to be added to the root node MS0 for the purpose of speaking, the process of adding hereinafter occurs.

S601: The SIP AS sends a BYE message to the leaf node MS1, instructing the MS1 to release the resources of the conference terminal T1 for communication with the user equipment U1.

S602: The SIP AS sends an INVITE message to the root node MS0. The INVITE message carries the SDP₁ information of the user equipment U1.

S603: After receiving the INVITE message, the MS0 creates a conference terminal T0, and allocates an IP port for receiving and another IP port for sending audio packets, to the conference terminal T0. Then the MS0 returns a 200 OK message to the SIP AS. The 200 OK message carries the SDP₀ information of the conference terminal T0. The SDP₀ information includes: IP address and port ID of the conference terminal T0 for receiving the audio packets, and type of media for processing.

S604: The SIP AS sends a RE-INVITE message to the user equipment U1, with the SDP₀ information of the conference terminal T0 carried in the message.

S605: The U1 returns a 200 OK message to the SIP AS after receiving the RE-INVITE message. The 200 OK message carries the SDP₁ information of the user equipment U1.

S606: The SIP AS sends a SIP INFO message to the MS0, instructing the MS0 to add the conference terminal T0 into the master conference.

The previous embodiment is applicable to the circumstance that the resources on the root node MS0 are enough for adding a user equipment U1 into the conference. In other embodiments, if the resources on the root node MS0 are not enough, the SIP AS can take the steps shown in Figure 5 after performing S601 to add the UE into the master conference on the root node MS0.

In the previous embodiment, the sound (such as mute) can be set through a SIP INFO message. Furthermore, in other embodiments, the sound can be controlled through an INVITE message or a RE-INVITE message sent by the SIP AS. For example, the sound state can be set by changing the SDP information parameter in the INVITE or RE-INVITE message. Examples of such settings are: setting the IP in the "m=audio" line in the SDP information to "127.0.0.1 ", or setting the port ID to "0" to indicate that the sound is "mute and dumb"; or, setting the attribute line "a" after the "m" line to "recvonly" to indicate "mute", and setting the line "a" to "sendonly" to indicate "dumb"; or setting the line "a" to "sendonly" to indicate "speaking and non-mute". The above examples for exemplary purposes only, and the actual settings are not limited to them. Here, the "mute" means that it is forbidden to be heard from; the "dumb" means that it is forbidden to send a sound.

It should be noted that the previous embodiments illustrate an implementation method under the SIP protocol, and the present invention are not limited to such embodiments. For example, in some other embodiments, the method can be implemented under MGCP protocol. If the MGCP protocol is applied, the differences from the previous SIP-based implementation are: In the MGCP protocol, the AS instructs the MS to create a conference terminal by sending a CRCX message in place of the INVITE message in the previous embodiment; when creating the first conference terminal for the conference, the conference ID is not generated by the AS, but is generated by the MS when the MS creates a conference terminal; the conference ID generated is notified to the AS through a 200 OK message, so that the AS can notify the conference ID to the MS through a CRCX message when the AS instructs the MS to create another conference terminal again in the future.

Furthermore, when the AS instructs the MS to add a conference terminal into a conference or set the sound state of the MS and the UE, the AS sends a MDCX message under the MGCP protocol in place of the SIP INFO message in the previous embodiment. When the AS instructs the MS to release resources, the AS under the MGCP protocol sends a DLCX message in place of the BYE message in the previous embodiment.

The embodiments of the present invention concatenate multiple MSs into a tree topology structure to form a master-slave conference and implement functions of a large conference without limiting the UE quantity in the case that a single MS is not enough, thus solving the inability of convening large conferences reliably in the prior art for deficiency of MSs in the operation environment. The user can operate the conference on a large integrated virtual MS regardless of the conference size and the quantity of MSs on which the conference is distributed. The operators can deploy the MSs of a proper quantity according to the scale of the concurrent users. The existing MSs can be integrated into the technical solution under the present invention regardless of the manufacturer, only if they provide standard interfaces and capacity parameters. This also slashes the equipment cost greatly.

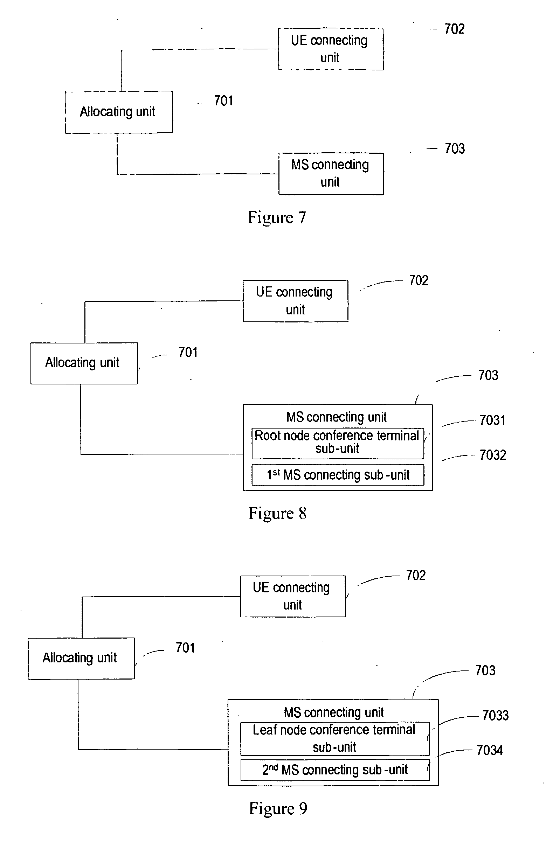

Based on the previous technical solution, an apparatus for setting up audio conference connections is disclosed according to some embodiments of the present invention. The apparatus can be integrated onto an application server such as SIP AS. When the resources of a single MS are not enough for supporting the whole audio conference, two or more MSs can be concatenated according to the quantity of UEs involved in the audio conference, so that all UEs that need to join the conference can be added into the conference. Figure 7 shows the structure of an apparatus for setting up an audio conference connection. The apparatus includes:
an allocating unit 701, adapted to allocate at least two Media Servers (MSs), dependent on the quantity of the UEs involved in the audio conference; and select one of the MSs as a root node MS, with the remaining MSs as leaf node MSs, wherein the quantity of the allocated MSs depends on the size of the audio conference and the resource capacity of each MS;
a UE connecting unit 702, adapted to distribute the UEs onto MSs allocated by the allocating unit 701, and set up a connection between each UE and the MS that serves the UE, wherein: UE connecting units 702 can allocate the UEs ready to speak onto the root node MS and allocate other UEs not ready to speak onto the leaf node MSs; the connection between the UE and the MS is set up by creating a conference terminal associated with the UE on the MS to accomplish a connection with the conference terminal;
an MS connecting unit 703, adapted to set up a connection between every leaf node MS in the allocating unit 701 and the root node MS. Every MS connecting unit 703 can instruct to create an associated conference terminal on the root node MS and the leaf node MS respectively, and implement connection between the root node MS and the leaf node MS through communication between the conference terminals.

The process of creating an associated conference terminal on the root node MS and the leaf node MS respectively may be embodied as different modes: one of the modes, instructing the leaf node MS to create a conference terminal associated with the conference terminal on the root node MS, or further instructing the root node MS to create a conference terminal associated with the conference terminal on the leaf node. The apparatuses corresponding to those two modes are described below with reference to accompanying drawings.

Figure 8 shows an example structure of an MS connecting unit 703 according to an embodiment of the present invention, wherein the MS connecting unit 703 may instruct the leaf node MS to create a conference terminal T1 associated with the conference terminal T0 on the root node MS. On the basis of the apparatus shown in Figure 7, the MS connecting unit 703 includes: a root node conference terminal sub-unit 7031, and a first MS connecting sub-unit 7032, wherein:
the root node conference terminal sub-unit 7031 is adapted to send an INVITE message to the root node MS in the allocating unit 701, instructing the root node MS to create a conference terminal T0;
the first MS connecting sub-unit 7032 is adapted to send an INVITE message to the leaf node MS in the allocating unit 701 after receiving a response message from the root node MS; the INVITE message includes SDP₀ information of the conference terminal T0 created by the root node MS, for the purpose of instructing the leaf node MS to create a conference terminal T1 associated with the conference terminal T0 of the root node MS according to the SDP₀ information. In this way, the two conference terminals T0 and T1 know the SDP information of each other, and can transmit data according to the SDP information of each other in the subsequent communication. The SDP information includes: IP address and port ID of the conference terminal for receiving the audio packets, and type of media for processing.

Figure 9 shows another structure of an MS connecting unit 703 shown in Figure 7, wherein the MS connecting unit 703 may instruct the root node MS to create a conference terminal T0 associated with the conference terminal T1 on the leaf node MS. On the basis of the apparatus shown in Figure 7, the MS connecting unit 703 includes: a leaf node conference terminal sub-unit 7033, and a second MS connecting sub-unit 7034, wherein:
the leaf node conference terminal sub-unit 7033 is adapted to send an INVITE message to the leaf node MS in the allocating unit 701, instructing the leaf node MS to create a conference terminal T1;
the second MS connecting sub-unit 7034 is adapted to send an INVITE message to the root node MS in the allocating unit 701 after receiving a response message from the leaf node MS; the INVITE message includes SDP1 information of the conference terminal T1 created by the leaf node MS, for the purpose of instructing the root node MS to create a conference terminal T0 associated with the conference terminal T1 of the leaf node MS according to the SDP1 information. In this way, the two conference terminals T0 and T1 know the SDP information of each other, and can transmit data according to the SDP information of each other in the subsequent communication. The SDP information includes: IP address and port ID of the conference terminal for receiving the audio packets, and type of media for processing.

The previous embodiments of the apparatus are specific to the static concatenation mode. Nevertheless, in the conference process, if a new member wants to join the conference, the apparatus will calculate out whether the MS involved in the conference has additional resources for creating a conference terminal. If additional resources are available, the UE connecting unit 702 of this apparatus will allocate a conference terminal to the new UE on the MS with available resources to connect the new UE with the MS that serves the conference.

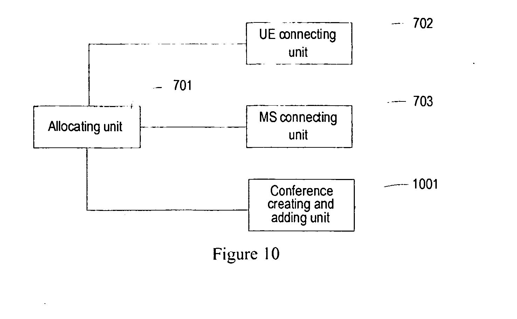

Furthermore, when the UE or leaf node MS connected with the root node MS or the UE connected with the leaf node MS is not added into the conference, the apparatus can be further used to add the UE or leaf node into the conference. Figure 10 shows the architecture of another apparatus for setting up an audio conference connection according to an embodiment of the present invention. On the basis of the apparatus shown in Figure 7, this apparatus can include:
a conference creating and adding unit 1001, adapted to create a master conference of the audio conference on the root node MS in the allocating unit 701; add the conference terminal on the root node MS into the master conference; create a slave conference of the audio conference on each leaf node MS in the allocating unit 701; and add the conference terminal on each leaf node MS into the slave conference.

For example, the conference creating unit 1001 can send a SIP INFO message to the root node MS, instructing the root node MS to create a master conference and add the conference terminal on the root node MS into the created master conference. The conference creating unit 1001 can send a SIP INFO message to the leaf node MS, instructing the leaf node MS to create a slave conference and add the conference terminal on the leaf node MS into the created slave conference.

Furthermore, the conference creating unit 1001 and the conference adding unit 1002 shown in Figure 10 are applied not only to the apparatus shown in Figure 7, but also to the apparatus shown in Figure 8 or Figure 9, with the connection relations being the same as that shown in Figure 10.

The apparatuses described above are for illustration only. The unit described above as a separate component may be or may not be physically separated; the component displayed as a unit may be or may not be a physical unit; the components can be located in a place or distributed onto multiple network units. The users can select part or all of the modules according to their own needs to fulfill the purposes of the embodiments of the present invention. Ordinary technicians in this field can understand and implement the technical solutions without making any creative effort.

After study of the above embodiments, technicians in this field should understand that the invention may be realized through software and general hardware platforms or through hardware only. In most cases, software plus general hardware platforms is a better way. Based on such understandings, the technical solution provided in embodiments of the invention or contributions to the prior art can be embodied in software products. The software is stored in a storage medium (for example, ROM/RAM, disk, and CD) and incorporates several instructions to instruct a computer device (for example, PC, server, or network device) to execute the method provided in the embodiments of the present invention.

The embodiments described above are only better ones of this invention, and they are not used to confine the protection scope of this invention. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for establishing communication of audio conference, comprising:
allocating, by an allocating unit (701), at least two Media Servers, MSs, according to the quantity of terminals involved in an audio conference;
selecting, by the allocating unit (701), one MS from the at least two MSs as a root node MS, and the remaining MS(s) as leaf node MS;
establishing (301~305), by a terminal communication unit (702), communication between the root node MS and the leaf node MS(s); and
establishing (401~406), by a MS communication unit (703), communication between a terminal and the MS served for the terminal;
**characterized in that** the process of establishing, by the MS communication unit, communication between a terminal and the MS served for the terminal further comprises:
allocating terminals ready to speak onto the root node MS; and
allocating other terminals not ready to speak onto the leaf node MS.

2. The method according to claim 1, **characterized in**, the process of establishing communication between the root node MS and the leaf node MS(s) further comprising:
establishing conference terminals in the root node MS, wherein the quantity of the conference terminals in the root node MS is the same as that of the leaf node MS(s), and each conference terminal in the root node MS communicates respectively with a leaf node MS (301 ~ 302);
notifying Session Description Protocol information of the conference terminal in the root node MS to the corresponding leaf node MS respectively (303);
establishing conference terminal in every one of the leaf node MS(s), wherein the conference terminal in the every one of the leaf node MS(s) communicates respectively with the corresponding conference terminal in the root node MS (304);
notifying Session Description Protocol information of the conference terminal in the every one of the leaf node MS(s) to the root node MS (305); wherein the Session Description Protocol information comprises IP address, port quantity, and type for processing media, for receiving audio data packages by the conference terminals.

3. The method according to claim 1, **characterized in**, the process of establishing communication between the root node MS and the leaf node MS(s) further comprising:
establishing conference terminal in every one of the leaf node MS(s), wherein the conference terminal in the every one of the leaf node MS(s) is communicated respectively with the root node MS (301');
notifying Session Description Protocol information of the conference terminals in the leaf node MS(s) to the root node MS (302');
establishing conference terminals in the root node MS, wherein the conference terminals in the root node MS communicate respectively with the corresponding conference terminals in the leaf node MS(s) (303');
notifying Session Description Protocol information of the conference terminals in the root node MS to the corresponding leaf node MS (305); wherein the Session Description Protocol information comprises IP address, port quantity, and type for processing media, for receiving audio data package by the conference terminals.

4. The method according to any one of claims 1 to 3, **characterized in**, further comprising:
establishing a master conference of the audio conference on the root node MS and a slave conference of the audio conference on every leaf node MS (306,307);
enabling the conference terminals of the root node MS to join in the master conference (306); and
enabling the every conference terminal of the leaf node MSs to join in the slave conference of corresponding leaf node MS (307).

5. The method according to any one of claims 1 to 4, **characterized in**, further comprising:
determining whether the root node MS has resource for communicating with a new leaf node MS when a new terminal joins in the audio conference;
establishing the communication between the new leaf node MS and the root node MS if the root node MS has the resource; and
establishing the communication between the new terminal and the new leaf node MS.

6. The method according to claim 5, **characterized in**, further comprising:
transferring a terminal of the root node MS from the master conference on the root node MS to the slave conference on a leaf node MS when the root node MS has no the resource, so as to save resource;
establishing communication between a new leaf node MS and the root node MS by using the saved resource; and
establishing communication between a new terminal and the new leaf node MS.

7. The method according to claim 4, wherein if a terminal on the leaf node needs to speak, the terminal exits the slave conference on the leaf node MS and joins the master conference on the root node MS.

8. An apparatus for establishing communication of audio conference, wherein the apparatus comprises:
an allocating unit (701), adapted to allocate at least two Media Servers, MSs, according to the quantity of terminals involved in an audio conference, and select one MS from the at least two MSs as a root node MS, and the remaining MS(s) as leaf node MS;
a terminal communication unit (702), adapted to establish communication between a terminal and an MS served for the terminal; and
an MS communication unit (703), adapted to establish communication between the root node MS and the leaf node MS(s); **characterized in that** the terminal communication unit allocates terminals ready to speak onto the root node MS and allocates other terminals not ready to speak onto the leaf node MS.

9. The apparatus according to claim 8, wherein the MS communication unit (703) further comprises:
a root node conference terminal sub-unit (7031), adapted to send a first message to the root node MS, in order to indicate the root node MS to establish conference terminals;
an MS communication sub-unit (7032), adapted to send a second message comprising Session Description Protocol information of the conference terminal established by the root node MS to a leaf node MS, in order to indicate the leaf node MS to establish, according to the Session Description Protocol information, a conference terminal.

10. The apparatus according to claim 8, wherein the MS communication unit (703) further comprises:
a leaf node conference terminal sub-unit (7033), adapted to send a third message to a leaf node MS, in order to indicate the leaf node MS to establish a conference terminal;
an MS communication sub-unit (7034), adapted to send a fourth message comprising Session Description Protocol information of the conference terminal established by the leaf node MS to the root node MS, in order to indicate the root node MS to establish, according to the Session Description Protocol information, a conference terminal.

11. The apparatus according to any one of claims 8 to 10, wherein the apparatus further comprises:
a conference establishing and joining unit (1001,1002), adapted to establish a master conference of the audio conference in the root node MS, enable conference terminals of the root node MS join in the master conference, establish a slave conference of the audio conference in the every leaf node MS, and enable a conference terminal of the every leaf node MS join in corresponding slave conference.

12. A computer program product, **characterized in**, comprising computer program code, which, when executed by a computer unit, will cause the computer unit perform all steps of any one of claims 1-7.

## Patentansprüche

1. Verfahren zum Herstellen von Audiokonferenz-Kommunikation, mit den folgenden Schritten:
Zuteilen von mindestens zwei Medienservern MS durch einen Zuteilungseinheit (701) gemäß der Quantität der an einer Audiokonferenz beteiligten Endgeräte;
Auswählen eines MS aus den mindestens zwei MS als einen Wurzelknoten-MS und des bzw. der übrigen MS als Blattknoten-MS durch die Zuteilungseinheit (701);
Herstellen (301-305) der Kommunikation zwischen dem Wurzelknoten-MS und dem bzw. den Blattknoten-MS durch eine Endgeräte-Kommunikationseinheit (702); und
Herstellen (401-406) der Kommunikation zwischen einem Endgerät und dem versorgten MS für das Endgerät durch eine MS-Kommunikationseinheit (703);
**dadurch gekennzeichnet, dass** der Prozess des Herstellens der Kommunikation zwischen einem Endgerät und dem versorgten MS für das Endgerät durch die MS-Kommunikationseinheit ferner Folgendes umfasst:
Zuteilen von zum Sprechen bereiten Endgeräten auf den Wurzelknoten-MS; und
Zuteilen anderer nicht zum Sprechen bereiter Endgeräte auf den Blattknoten-MS.

2. Verfahren nach Anspruch 1, **dadurch gekennzeichnet, dass** der Prozess des Herstellens der Kommunikation zwischen dem Wurzelknoten-MS und dem bzw. den Blattknoten-MS ferner Folgendes umfasst:
Festlegen von Konferenzendgeräten in dem Wurzelknoten-MS, wobei die Quantität der Konferenzendgeräte in dem Wurzelknoten-MS dieselbe wie die des bzw. der Blattknoten-MS ist und jedes Konferenzendgerät in dem Wurzelknoten-MS jeweils mit einem Blattknoten-MS kommuniziert (301-302);
Melden von Informationen des Session Description Protocol des Konferenzendgeräts in dem Wurzelknoten-MS jeweils an den entsprechenden Blattknoten-MS (303);
Festlegen des Konferenzendgeräts in jedem einzelnen der Blattknoten-MS, wobei das Konferenzendgerät in jedem einzelnen der Blattknoten-MS jeweils mit dem entsprechenden Konferenzendgerät in dem Wurzelknoten-MS kommuniziert (304);
Melden von Informationen des Session Description Protocol des Konferenzendgeräts in jedem einzelnen der Blattknoten-MS an den Wurzelknoten-MS (305); wobei die Informationen des Session Description Protocol Folgendes umfassen: IP-Adresse, Portquantität und Typ für die Verarbeitung von Medien, für das Empfangen von Audiodatenpaketen durch die Konferenzendgeräte.

3. Verfahren nach Anspruch 1, **dadurch gekennzeichnet, dass** der Prozess des Herstellens der Kommunikation zwischen dem Wurzelknoten-MS und dem bzw. Blattknoten-MS ferner Folgendes umfasst:
Festlegen des Konferenzendgeräts in jedem einzelnen der Blattknoten-MS, wobei das Konferenzendgerät in jedem einzelnen der Blattknoten-MS jeweils mit dem Wurzelknoten-MS kommuniziert (301');
Melden von Informationen des Session Description Protocol der Konferenzendgeräte in dem bzw. den Blattknoten-MS an den Wurzelknoten-MS (302');
Festlegen von Konferenzendgeräten in dem Wurzelknoten-MS, wobei die Konferenzendgeräte in dem Wurzelknoten-MS jeweils mit den entsprechenden Konferenzendgeräten in dem bzw. den Blattknoten-MS kommunizieren (303');
Melden von Informationen des Session Description Protocol der Konferenzendgeräte in dem Wurzelknoten-MS an den entsprechenden Blattknoten-MS (305); wobei die Informationen des Session Description Protocol Folgendes umfassen: IP-Adresse, Portquantität und Typ für die Verarbeitung von Medien, für das Empfangen von Audiodatenpaketen durch die Konferenzendgeräte.

4. Verfahren nach einem der Ansprüche 1-3, **dadurch gekennzeichnet, dass** es ferner Folgendes umfasst:
Herstellen einer Master-Konferenz der Audiokonferenz auf dem Wurzelknoten-MS und einer Slave-Konferenz der Audiokonferenz auf jedem Blattknoten-MS (306, 307);
Freigeben der Konferenzendgeräte des Wurzelknoten-MS, der Master-Konferenz beizutreten (306); und
Freigeben jedes Konferenzendgeräts der Blattknoten-MS, der Slave-Konferenz des entsprechenden Blattknoten-MS beizutreten (307).

5. Verfahren nach einem der Ansprüche 1 bis 4, **dadurch gekennzeichnet, dass** es ferner Folgendes umfasst:
Bestimmen, ob der Wurzelknoten-MS Ressourcen zum Kommunizieren mit einem neuen Blattknoten-MS besitzt, wenn ein neues Endgerät der Audiokonferenz beitritt;
Herstellen der Kommunikation zwischen dem neuen Blattknoten-MS und dem Wurzelknoten-MS, wenn der Wurzelknoten-MS die Ressource besitzt; und
Herstellen der Kommunikation zwischen dem neuen Endgerät und dem neuen Blattknoten-MS.

6. Verfahren nach Anspruch 5, **dadurch gekennzeichnet, dass** es ferner Folgendes umfasst:
Transferieren eines Endgeräts des Wurzelknoten-MS von der Master-Konferenz auf dem Wurzelknoten-MS zu der Slave-Konferenz auf einem Blattknoten-MS, wenn der Wurzelknoten-MS die Ressourcen nicht besitzt, um so Ressourcen zu sparen;
Herstellen der Kommunikation zwischen einem neuen Blattknoten-MS und dem Wurzelknoten-MS durch Verwenden der gesparten Ressourcen; und
Herstellen der Kommunikation zwischen einem neuen Endgerät und dem neuen Blattknoten-MS.

7. Verfahren nach Anspruch 4, wobei, wenn ein Endgerät auf dem Blattknoten sprechen muss, das Endgerät aus der Slave-Konferenz aus dem Blattknoten-MS austritt und der Master-Konferenz auf dem Wurzelknoten-MS beitritt.

8. Vorrichtung zur Herstellung von Audiokonferenz-Kommunikation, wobei die Vorrichtung Folgendes umfasst:
eine Zuteilungseinheit (701), die dafür ausgelegt ist, mindestens zwei Medienserver MS gemäß der Quantität der an einer Audiokonferenz beteiligten Endgeräte zuzuteilen und
einen MS aus den mindestens zwei MS als einen Wurzelknoten-MS und den bzw. die übrigen MS als Blattknoten-MS auszuwählen;
eine Endgeräte-Kommunikationseinheit (702), die dafür ausgelegt ist, die Kommunikation zwischen einem Endgerät und einem versorgten MS für das Endgerät herzustellen; und
eine MS-Kommunikationseinheit (703), die dafür ausgelegt ist, die Kommunikation zwischen dem Wurzelknoten-MS und dem bzw. den Blattknoten-MS herzustellen,
**dadurch gekennzeichnet, dass** die Endgeräte-Kommunikationseinheit zum Sprechen bereite Endgeräte auf den Wurzelknoten-MS zuteilt und andere nicht zum Sprechen bereite Endgeräte auf den Blattknoten-MS zuteilt.

9. Vorrichtung nach Anspruch 8, wobei die MS-Kommunikationseinheit (703) ferner Folgendes umfasst:
eine Wurzelknoten-Konferenzendgeräte-Subeinheit (7031), die dafür ausgelegt ist, eine erste Nachricht zu dem Wurzelknoten-MS zu senden, um dem Wurzelknoten-MS anzuzeigen, Konferenzendgeräte festzulegen;
eine MS-Kommunikations-Subeinheit (7032), die dafür ausgelegt ist, eine zweite Nachricht, die Informationen des Session Description Protocol des durch den Wurzelknoten-MS festgelegten Konferenzendgeräts enthält, zu einem Blattknoten-MS zu senden, um dem Blattknoten-MS anzuzeigen, gemäß den Informationen des Session Description Protocol ein Konferenzendgerät festzulegen.

10. Vorrichtung nach Anspruch 8, wobei die MS-Kommunikationseinheit (703) ferner Folgendes umfasst:
eine Blattknoten-Konferenzendgeräte-Subeinheit (7033), die dafür ausgelegt ist, eine dritte Nachricht zu einem Blattknoten-MS zu senden, um dem Blattknoten-MS anzuzeigen, ein Konferenzendgerät festzulegen;
eine MS-Kommunikations-Subeinheit (7034), die dafür ausgelegt ist, eine vierte Nachricht, die Informationen des Session Description Protocol des durch den Blattknoten-MS festgelegten Konferenzendgeräts enthält, zu dem Wurzelknoten-MS zu senden, um dem Wurzelknoten-MS anzuzeigen, gemäß den Informationen des Session Description Protocol ein Konferenzendgerät festzulegen.

11. Vorrichtung nach einem der Ansprüche 8 bis 10, wobei die Vorrichtung ferner Folgendes umfasst:
eine Konferenzherstellungs- und -beitrittseinheit (1001, 1002), die dafür ausgelegt ist, eine Master-Konferenz der Audiokonferenz in dem Wurzelknoten-MS herzustellen, Konferenzendgeräte des Wurzelknoten-MS freizugeben, der Master-Konferenz beizutreten, eine Slave-Konferenz der Audiokonferenz in jedem Blattknoten-MS herzustellen und ein Konferenzgerät jedes Blattknoten-MS freizugeben, der entsprechenden Slave-Konferenz beizutreten.

12. Computerprogrammprodukt, **dadurch gekennzeichnet, dass** es Computerprogrammcode umfasst, der, wenn er durch eine Computereinheit ausgeführt wird, bewirkt, dass die Computereinheit alle Schritte nach einem der Ansprüche 1 - 7 ausführt.

## Revendications

1. Procédé pour établir une communication de conférence audio, comprenant les étapes consistant à :
allouer, par l'intermédiaire d'une unité d'allocation (701), au moins deux serveurs de média, SM, en fonction de la quantité de terminaux impliqués dans une conférence audio ;
sélectionner, par l'intermédiaire de l'unité d'allocation (701), un SM parmi les au moins deux SM comme SM de noeud racine, et le/les SM restant(s) comme SM de noeud feuille ;
établir (301~305), par l'intermédiaire d'une unité de communication de terminal (702), une communication entre le SM de noeud racine et le/les SM de noeud feuille ; et
établir (401~406), par l'intermédiaire d'une unité de communication de SM (703), une communication entre un terminal et le SM desservi pour le terminal ;
**caractérisé en ce que** le procédé d'établissement, par l'intermédiaire de l'unité de communication de SM, d'une communication entre un terminal et le SM desservi pour le terminal comprend en outre les étapes consistant à :
allouer les terminaux prêts à parler au SM de noeud racine ; et
allouer les autres terminaux non prêts à parler au SM de noeud feuille.

2. Procédé selon la revendication 1, **caractérisé en ce que** le procédé d'établissement d'une communication entre le SM de noeud racine et le/les SM de noeud feuille comprend en outre les étapes consistant à :
établir les terminaux de conférence dans le SM de noeud racine, où la quantité des terminaux de conférence dans le SM de noeud racine est la même que celle du/des SM de noeud feuille, et chaque terminal de conférence dans le SM de noeud racine communique respectivement avec un SM de noeud feuille (301~302) ;
notifier des informations de protocole de description de session du terminal de conférence dans le SM de noeud racine au SM de noeud feuille correspondant (303), respectivement ;
établir un terminal de conférence dans chacun des SM de noeud feuille, où le terminal de conférence dans chacun des SM de noeud feuille communique respectivement avec le terminal de conférence correspondant dans le SM de noeud racine (304) ;
notifier des informations de protocole de description de session du terminal de conférence dans chacun des SM de noeud feuille au SM de noeud racine (305) ; où les informations de protocole de description de session comprennent une adresse IP, une quantité de ports et un type pour traiter le média, pour recevoir les paquets de données audio par les terminaux de conférence.

3. Procédé selon la revendication 1, **caractérisé en ce que** le procédé d'établissement d'une communication entre le SM de noeud racine et le/les SM de noeud feuille comprend en outre les étapes consistant à :
établir un terminal de conférence dans chacun des SM de noeud feuille, où le terminal de conférence dans chacun des SM de noeud feuille communique respectivement avec le SM de noeud racine (301') ;
notifier des informations de protocole de description de session des terminaux de conférence dans le/les SM de noeud feuille au SM de noeud racine (302') ;
établir des terminaux de conférence dans le SM de noeud racine, où les terminaux de conférence dans le SM de noeud racine communiquent respectivement avec les terminaux de conférence correspondants dans le/les SM de noeud feuille (303') ;
notifier des informations de protocole de description de session des terminaux de conférence dans le SM de noeud racine au SM de noeud feuille correspondant (305) ; où les informations de protocole de description de session comprennent une adresse IP, une quantité de ports et un type pour traiter le média, pour recevoir les paquets de données audio par les terminaux de conférence.

4. Procédé selon l'une quelconque des revendications 1 à 3, **caractérisé en ce qu'**il comprend en outre les étapes consistant à :
établir une conférence principale de la conférence audio sur le SM de noeud racine et
une conférence esclave de la conférence audio sur chaque SM de noeud feuille (306, 307) ;
permettre aux terminaux de conférence du SM de noeud racine de rejoindre la conférence principale (306) ; et
permettre à chaque terminal de conférence du/des SM de noeud feuille de rejoindre la conférence esclave du SM de noeud feuille correspondant (307).

5. Procédé selon l'une quelconque des revendications 1 à 4, **caractérisé en ce qu'**il comprend en outre les étapes consistant à :
déterminer si le SM de noeud racine dispose des ressources pour communiquer avec un nouveau SM de noeud feuille lorsqu'un nouveau terminal rejoint la conférence audio ;
établir la communication entre le nouveau SM de noeud feuille et le SM de noeud racine si le SM de noeud racine dispose des ressources requises ; et
établir la communication entre le nouveau terminal et le nouveau SM de noeud feuille.

6. Procédé selon la revendication 5, **caractérisé en ce qu'**il comprend en outre les étapes consistant à :
transférer un terminal du SM de noeud racine de la conférence principale sur le SM de noeud racine vers la conférence esclave sur un SM de noeud feuille, lorsque le SM de noeud racine ne dispose pas des ressources requises, de manière à préserver les ressources ;
établir une communication entre un nouveau SM de noeud feuille et le SM de noeud racine en utilisant les ressources préservées ; et
établir une communication entre un nouveau terminal et le nouveau SM de noeud feuille.

7. Procédé selon la revendication 4, dans lequel si un terminal sur le noeud feuille a besoin de parler, le terminal quitte la conférence esclave sur le SM de noeud feuille et rejoint la conférence principale sur le SM de noeud racine.

8. Appareil pour établir une communication de conférence audio, où l'appareil comprend :
une unité d'allocation (701), adaptée pour allouer au moins deux serveurs de média, SM, en fonction de la quantité de terminaux impliqués dans une conférence audio, et
sélectionner un SM parmi les au moins deux SM comme SM de noeud racine, et le/les SM restant(s) comme SM de noeud feuille ;
une unité de communication de terminal (702), adaptée pour établir une communication entre un terminal et un SM desservi pour le terminal ; et
une unité de communication de SM (703), adaptée pour établir une communication entre le SM de noeud racine et le/les SM de noeud feuille ; **caractérisé en ce que** l'unité de communication de terminal alloue les terminaux prêts à parler au SM de noeud racine et alloue les autres terminaux non prêts à parler au SM de noeud feuille.

9. Appareil selon la revendication 8, dans lequel l'unité de communication de SM (703) comprend en outre :
une sous-unité de terminal de conférence de noeud racine (7031), adaptée pour envoyer un premier message au SM de noeud racine, de manière à indiquer au SM de noeud racine d'établir des terminaux de conférence ;
une sous-unité de communication de SM (7032), adaptée pour envoyer un second message comprenant des informations de protocole de description de session du terminal de conférence établi par le SM de noeud racine à un SM de noeud feuille, de manière à indiquer au SM de noeud feuille d'établir, en fonction des informations de protocole de description de session, un terminal de conférence.

10. Appareil selon la revendication 8, dans lequel l'unité de communication de SM (703) comprend en outre :
une sous-unité de terminal de conférence de noeud feuille (7033), adaptée pour envoyer un troisième message à un SM de noeud feuille, de manière à indiquer au SM de noeud feuille d'établir un terminal de conférence ;
une sous-unité de communication de SM (7034), adaptée pour envoyer un quatrième message comprenant des informations de protocole de description de session du terminal de conférence établi par le SM de noeud feuille au SM de noeud racine, de manière à indiquer au SM de noeud racine d'établir, en fonction des informations de protocole de description de session, un terminal de conférence.

11. Appareil selon l'une quelconque des revendications 8 à 10, dans lequel l'appareil comprend en outre :
une unité de raccordement et d'établissement de conférence (1001, 1002), adaptée pour établir une conférence principale de la conférence audio dans le SM de noeud racine, permettre à des terminaux de conférence du SM de noeud racine de se joindre à la conférence principale, établir une conférence esclave de la conférence audio dans chaque SM de noeud feuille, et permettre à un terminal de conférence de chaque SM de noeud feuille de se joindre à la conférence esclave correspondante.

12. Produit logiciel informatique, **caractérisé en ce qu'**il comprend un code de programme informatique qui, lorsqu'il est exécuté par un ordinateur, amène l'ordinateur à exécuter toutes les étapes de l'une quelconque des revendications 1 à 7.
